Europäisches Patentamt

European Patent Office

Office européen des brevets

(11) Publication number: 0 375 339 A2

(12) **EUROPEAN PATENT APPLICATION**

(21) Application number: 89313248.0

(51) Int. Cl.⁵: G06F 15/72

(22) Date of filing: 19.12.89

(30) Priority: 20.12.88 JP 325048/88
16.03.89 JP 62033/89
16.03.89 JP 62035/89

(43) Date of publication of application:
27.06.90 Bulletin 90/26

(84) Designated Contracting States:
DE FR GB

(71) Applicant: FUJITSU LIMITED
1015, Kamikodanaka Nakahara-ku
Kawasaki-shi Kanagawa 211(JP)

Applicant: FUJITSU MICROCOMPUTER
SYSTEMS LIMITED
1015, Kamikodanaka Nakahara-ku
Kawasaki-shi Kanagawa-ken 211(JP)

(72) Inventor: Taniai, Takayoshi
1339, Shimosakunobe Takatsu-ku
Kawasaki-shi Kanagawa 211(JP)
Inventor: Sato, Hajime
1-4-12, Kitamagome
Ota-ku Tokyo 143(JP)
Inventor: Shimura, Hidetoshi Yurihaitsu A-103
13-7, Shukugawara 6-chome Tama-ku
Kawasaki-shi Kanagawa 214(JP)
Inventor: Saitoh, Tadashi TOP Shinmaruko
306
1-1525, Sanno-cho Kamimaruko Nakahara-ku
Kawasaki-shi Kanagawa 211(JP)

(74) Representative: Fane, Christopher Robin King
et al
HASELTINE LAKE & CO. Hazlitt House 28
Southampton Buildings Chancery Lane
London, WC2A 1AT(GB)

(54) **Image processing apparatus and a system using the same.**

(57) An image processing apparatus includes: a unit for fetching commands and parameters from an outside of the image processing apparatus by way of direct memory access transfer; and a control unit for controlling display and image-drawing processing according to the fetched commands and parameters. By including a conditional branch unit for effecting conditional judgement based on arbitrary data designated from the outside of the image processing apparatus to carry out a processing of branching to a predetermined address, it is possible for the image processing apparatus in itself to judge a system mode to efficiently carry out image processing. Also, where the image processing apparatus is incorporated into a system including a CPU, it is possible to reduce a burden to the CPU to contribute to an improvement in an efficiency of operation of the entire system.

Fig. I

# IMAGE PROCESSING APPARATUS AND A SYSTEM USING THE SAME

The present invention relates to image processing apparatus, for example of the kind which fetches commands and parameters by way of direct memory access (DMA) transfer in itself and carries out display and image-drawing processing. The invention also relates to systems using image processing apparatus.

An apparatus for displaying graphical information such as diagrams, figures, or the like on a cathode ray tube (CRT) should preferably be capable of high resolution and high speed operation. Accordingly, where a host computer (CPU) incorporated in a image processing system carries out the display and image-drawing processing of the graphic, a drawback occurs in that it takes long time to complete the image processing and thus the system performance is lowered as a whole. In view of this, various approaches are proposed in which the display and image-drawing processing is exclusively executed by a processing apparatus other than a CPU.

In one such approach a CPU only issues commands and parameters and a dedicated image processor, e.g., bit map display controller, carries out image processing based on the commands and parameters.

In a second such approach an image processor fetches commands and parameters by way of DMA transfer in itself and carries out image processing. These approaches contribute to reduction in the burden to the CPU.

However, according to the first approach described above, the CPU must supply the image processor with the command or parameter every time the image processor executes one step of the image processing. Accordingly, it is difficult to efficiently run the CPU. This results in a lowering in the performance of the entire system and thus is not preferable.

On the other hand, according to the second approach, the image processor can only execute a predetermined program in sequence and thus it is impossible to branch or jump to a certain suitable program routine in accordance with a system mode. For example, even if image processing program corresponding to CRTs having different resolution is to be produced, the image processor cannot recognize the resolution to effect conditional judgement. As a result, the resolution capable of being processed by one program is limited to one kind. The processing for a plurality of kinds of resolution is carried out as follows: First, the image processor suspends image processing presently being executed, and frees an external bus (address and data buses) from its occupation for the sake of the external CPU. Next, the external CPU effects conditional judgement, using the external bus, and rewrites the program list (commands and parameters) of the image processor. After completion of the processing by the CPU, the image processor is started to work and carries out image processing based on the rewritten program list.

Namely, the image processor in itself is not adapted so that it can effect conditional judgement for determining the next processing based on a result of the previously executed processing. Also, the external CPU participates in the execution of the image processing including the conditional judgement. Thus, the second approach has drawbacks in that it is impossible for the dedicated image processor to efficiently carry out the image processing, and that the efficiency of operation of the entire system including the image processor is lowered.

In actual image processing, the case that a result of the previously executed image-drawing processing needs to be reflected on the next processing often occurs. For example, judgement of a result of "search" processing is an example of the case. The "search" is a function of comparing boundary color and comparison color and employed as an auxiliary means for realizing a function such as painting. The next processing to be executed in the case that the boundary color accords with the comparison color is of course different from that to be executed in the case that the boundary color and comparison color do not accord with each other. However, previously-considered forms of image processing apparatus have, in themselves, been unable to carry out the image processing accompanied with such conditional judgement. It is desirable to improve the above-described second approach for carrying out image processing.

An embodiment of the present invention can provide an image processing apparatus which can in itself judge a system mode to efficiently carry out image processing.

A further embodiment of the present invention can provide a system using an image processing apparatus which can reduce a burden to an external CPU to contribute to an improvement in an efficiency of operation of the entire system.

According to one aspect of the present invention, there is provided an image processing apparatus.

Also, according to another aspect of the present invention, there is provided an image processing system.

Reference will now be made, by way of example, to the accompanying drawings, in which:

Fig. 1 is a block diagram illustrating a constitution of a system including an image processor embodying the present invention;

Fig. 2 is a block diagram illustrating a constitution of the image processor shown in Fig. 1;

Fig. 3 is a block diagram concretely illustrating the constitution of the image processor of Fig. 2, especially taking note of the fetching processing of commands and parameters;

Fig. 4 is a diagram illustrating the formation of the command stored in a command/parameter memory shown in Fig. 1;

Fig. 5 is a diagram illustrating bit formation in a control register shown in Fig. 2;

Figs. 6 and 7 are diagrams illustrating the bit formation of the conditional judgement command indicated by the "U" bit shown in Fig. 5;

Fig. 8 is a general flow chart representing the command processing by the image processor shown in Figs. 2 and 3;

Fig. 9 is a flow chart illustrating a control command processing step (540) of the flow-chart of Fig.8;

Fig. 10 is a flow chart illustrating an image-drawing command processing step (550) of the flow-chart of Fig. 8; and

Fig. 11 is a diagram illustrating an example of the content of the command/parameter memory shown in Fig. 1.

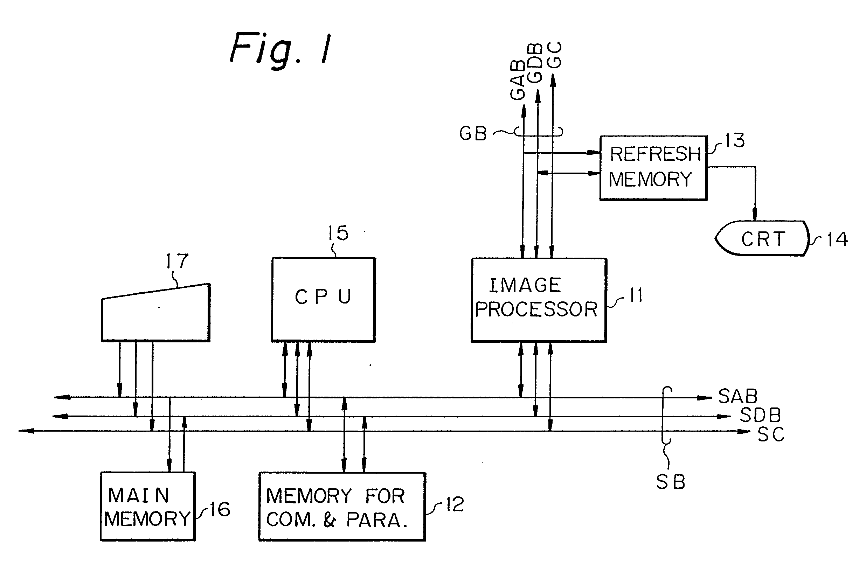

Figure 1 illustrates a constitution of the system including the image processor as an embodiment of the present invention.

In Fig. 1, reference SB denotes a system bus including an address bus SAB, a data bus SDB and control lines SC; reference GB a graphic bus including an address bus GAB, a data bus GDB and control lines GC; reference 11 an image processor adapted to thirty-two bits; reference 12 a command/parameter memory for storing control commands, image-drawing commands and parameters to be processed by the image processor 11; reference 13 a refresh memory for temporarily storing graphic data which is accessed by the image processor 11; reference 14 a CRT for displaying the graphic data; reference 15 a CPU for controlling the entire system (except for the image processing control); reference 16 a main memory for storing data necessary for the processings to be executed by the CPU 15; and reference 17 a data inputting unit such as a keyboard. The data inputting unit 17 is used when the content of the main memory 16 or the command/parameter memory 12 is rewritten.

The image processor 11 is preferably constituted in the form of an LSI and has a function of fetching the content of the command/parameter memory 12 by way of DMA transfer and effecting image processing based on the fetched content. Namely, the iamge processor 11 fetches the image-drawing commands (search, clipping, line-drawing, or the like), the control commands (conditional judgement branch, internal register setting, or the like) or the parameters (starting point and ending point of the line-drawing, or the like) from the command/parameter memory 12 and accesses the refresh memory 13 to carry out the image-drawing, search, conditional judgement, or the like.

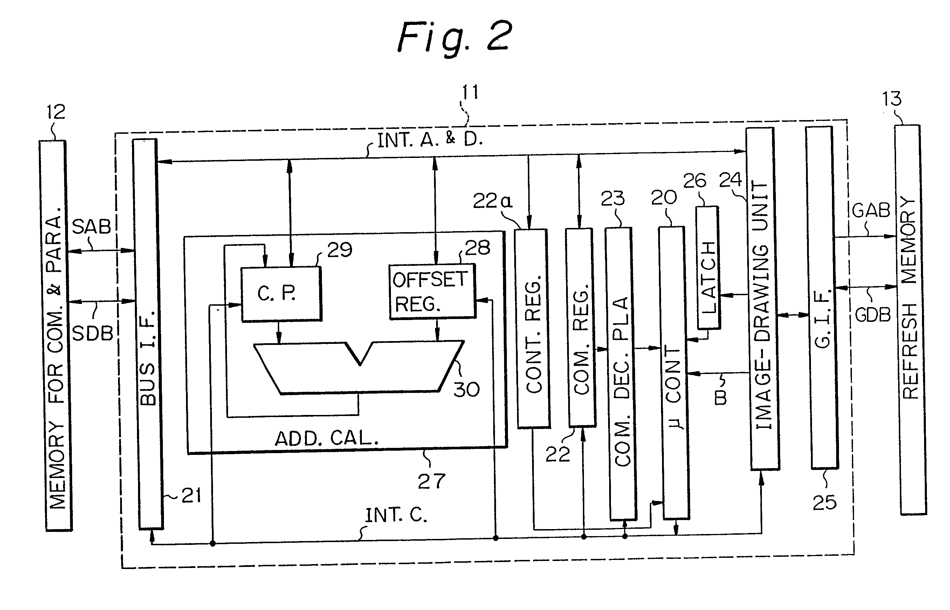

Next, a constitution of the image processor 11 will be explained with reference to Fig. 2.

In Fig. 2, reference 20 denotes a micro control unit which is mainly constituted by a micro sequencer and stores micro program made in advance. The micro control unit 20 effects a control of fetching the commands and parameters for image processing (DMA transfer control) and effects a control of transferring the fetched image-drawing commands to an image-drawing unit 24 to cause the unit 24 to execute the image-drawing processing.

Reference 21 denotes an interface unit which is mainly constituted by latches and buffers. The interface unit 21 has a function of transferring addresses and data from the buses SAB,SDB of the outside of the image processor 11 to the internal address/data bus (INT. A. & D.), or outputting the address, which indicates a command or parameter to be fetched at the next step, to the external address bus SAB in response to a control signal on the internal control line (INT. C.). Reference 22 denotes a command register for latching commands fetched from the outside of the processor under control from the micro control unit 20, and reference 23 denotes a command decode PLA (programmable logic array), which decodes the latched commands under control from the micro control unit 20 and transfers the decoded result to the micro control unit 20.

Also, reference 22a denotes a control register for latching information of a system mode defined by a user. The micro control unit 20 carries out conditional judgement according to the content of the control register 22a.

The image-drawing unit 24 is constituted by various parts such as a micro sequencer, barrel shifters, or the like, and executes the image-drawing commands (search, line-drawing, or the like) transferred from the micro control unit 20. Since a concrete constitution of the unit 20 is not concerned with the essentials of the present invention, the explanaton thereof is omitted. Reference 25 denotes an interface unit connected between the image-drawing unit 24 and the external refresh memory 13, which is mainly constituted by latches and buffers in the same manner as in the interface unit 21. For example, the interface unit 25 writes graphic data transferred from the image-drawing unit 24 into the refresh memory 13 when an image-drawing command indicates a "line-drawing", while it reads graphic data from the refresh memory 13 and transfers the read data to the image-drawing unit 24 when an image-drawing command indicates a "search". Also, the interface unit 25 outputs display signals such as a horizontal synchronizing signal (HSYNC), a vertical synchronizing signal (VSYNC) or the like necessary for the display processing. Since a constitution of the unit 25 is not directly concerned with the gist of the present invention, the explanaton thereof is omitted.

Reference 26 denotes a latch circuit which, in the present embodiment, functions when the image-drawing unit 24 executes a "search" command. For example, when the image-drawing unit 24 searches the refresh memory 13 to find a color concurring with a comparison color (reference color), i.e., when a necessity to proceed with the search processing is removed (when the search condition is not met), the image-drawing unit 24 sets "1" to the latch circuit 26. Inversely, when a necessity to proceed with the search processing is present (when the search condition is met), the image-drawing unit 24 sets "0" to the latch circuit 26.

Reference 27 denotes an address calculating unit which, under control from the micro control unit 20, calculates an address corresponding to the command to be executed at the next step. The address calculating unit 27 is constituted by: an offset register 28 and a command pointer 29 which carry out address/data transfer from and to the internal address/data bus (INT. A. & D.) under control from the micro control unit 20; and an adder 30 which responds to each output of the offset register 28 and command pointer 29 and transfers the added result to the command pointer 29.

The offset register 28 indicates "4" when information of the latch circuit 26 is "1" (when the search condtion is not met), while it indicates an address calculated in the address calculating unit 27 when information of the latch circuit 26 is "0" (when the search condtion is met). The command pointer 29 has a function of indicating an address corresponding to the command to be fetched from the command/parameter memory 12 at the next step. Assuming that the address corresponding to the command presently being executed is "A". When the information of the latch circuit 26 is "1", the command pointer 29 sequentially indicates (A + 4), (A + 8), (A + 12), ... ... , as the address corresponding to the command to be executed at the next step. Inversely, when the information of the latch circuit 26 is "0", the command pointer 29 indicates the address corresponding to the command to be executed when the search condition is met.

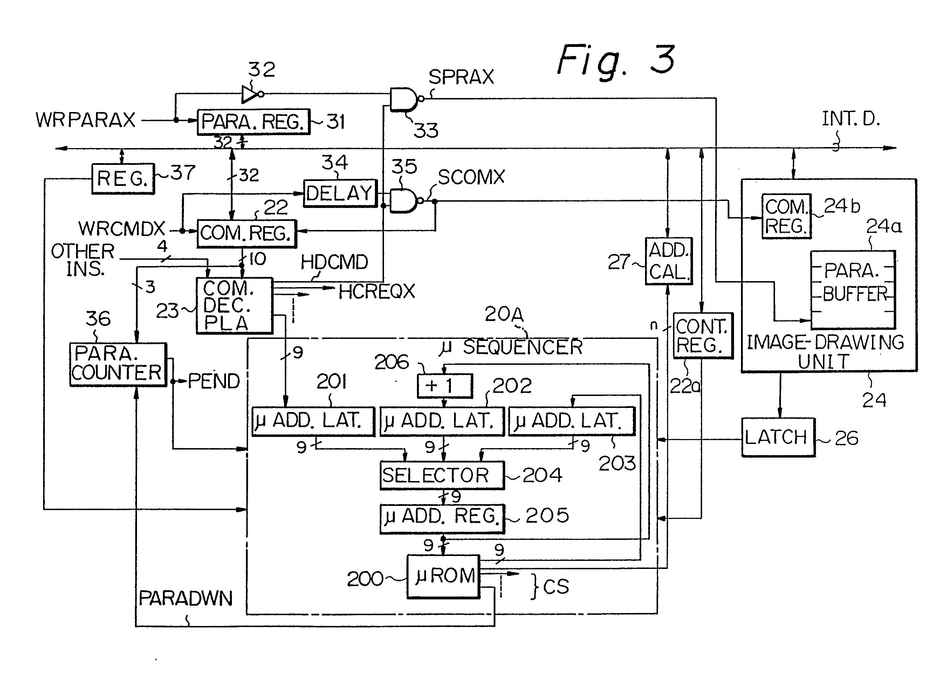

Figure 3 concretely illustrates the constitution of the image processor 11, especially taking note of the fetching processing of commands and parameters. Note, the same references as those used in Fig. 2 denote like constituent elements and thus the explanaton thereof is omitted.

Reference WRPARAX denotes a signal for writing parameters into a parameter register 31; reference WRCMDX a signal for writing commands into a command register 22; reference SPRAX a signal for writing parameters into a parameter buffer 24a within the image-drawing unit 24; reference SCOMX a signal for writing commands into a command register 24b within the image-drawing unit 24; reference HDCMD a signal indicating that a fetched command is an image-drawing command; reference HCREQX a signal indicating that a fetched command is a control command such as a conditional branch command; reference PARADWN a signal for counting down the content of a parameter counter 36; and reference PEND a signal indicating that the take-in processing of parameters is completed.

Also, reference 20A denotes a micro sequencer constituting the main part of the micro control unit 20. The micro sequencer 20A is constituted by: a micro ROM 200 having a capacity of 384 words multiplied by 60 bits and outputting the signal PARADWN, various control signals CS, an address signal of 9 bits and an address signal of n bits; a micro address latch 201 for storing address data of 9 bits from the command decode PLA 23; a micro address latch 202; a micro address latch 203 for storing the address signal of 9 bits from the micro ROM 200; a selector 204 for selecting one of the address signals of 9 bits output from the micro address latches 201,202 and 203; a micro address register 205 for storing the address signal of 9 bits selected by the selector 204 and outputting the stored signal to the micro ROM 200; and an incremental counter 206 for increasing the address value of 9 bits output from the micro address register 205, one by one, and outputting the increased address value to the micro address latch 202. Note, the address signal of n bits from the micro ROM 200 is fed to the address calculating unit 27. Also, the control signals CS from the micro ROM 200 are used for the image-drawing unit 24.

The constitution of Fig. 3 includes: the parameter register 31 connected to the internal data bus (INT. D.) and responsive to the signal WRPARAX; an inverter 32 responsive to the signal WRPARAX; a NAND gate 33 responsive to an output of the inverter 32 and the signal HDCMD and outputting the signal SPRAX; a delay circuit 34 responsive to the signal WRCMDX; a NAND gate 35 responsive to an output of the delay circuit 34 and the signal HDCMD and outputting the signal SCOMX; the parameter counter 36 responsive to the parameter data of 3 bits from the command register 22 and the signal PARADWN and outputting the signal PEND; and a register 37 connected to the internal data bus (INT. D.).

The register 37 stores information of resolution, or the like, and the latch 26 stores information of a result of the image-drawing processing. Also, the control register 22a stores information of the system mode as previously explained. Each information stored in the registers 37,22a and the latch 26 and the signal PEND are fed to a random logic circuit (not shown) within the micro sequencer 20A. The random logic circuit has a function of controlling each of the circuits (except for the micro ROM 200) within the micro sequencer 20A. Note, the output of the control register 22a is used as a trigger for starting the micro sequencer 20A. ALso, each output of the latch 26 and the registers 37 is used as a reference flag.

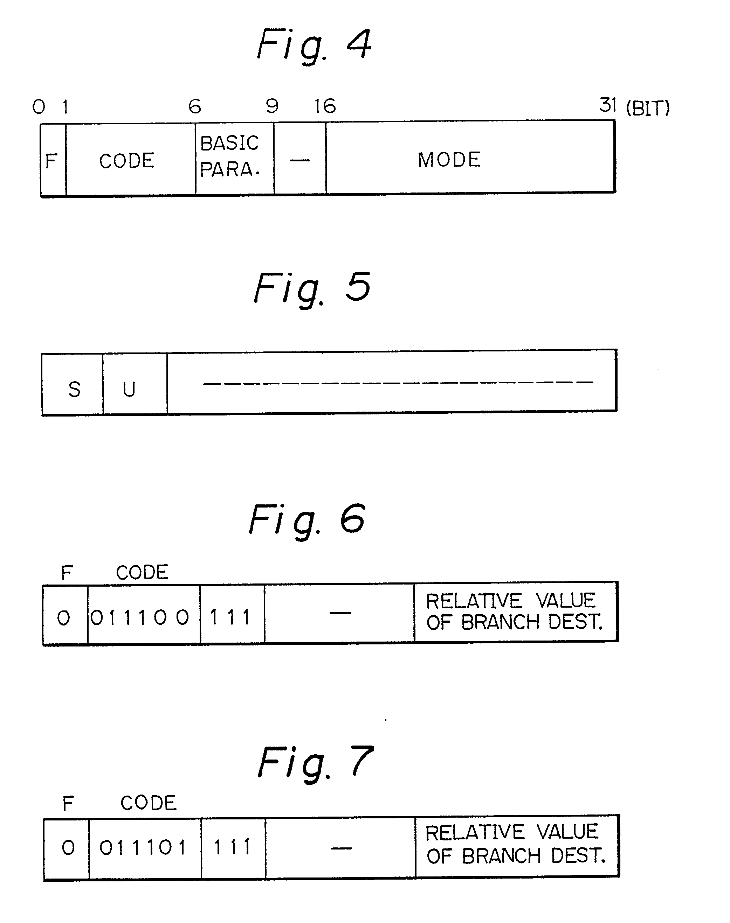

Figure 4 illustrates the formation of the command stored in the command/parameter memory 12.

In the illustration, "F" denotes a flag for indicating whether a command is a control command or an image-drawing command. In the present embodiment, a control command is indicated when the flag is "0", while an image-drawing command is indicated when the flag is "1".

"CODE" denotes a field for designating the kind of an operation code (control command or image-drawing command). The image processor 11 decodes the command designated by the "CODE" and recognizes what processing to execute. For example, where the flag "F" indicates a control command and the "CODE" is "011000", the "CODE" is recognized as a command for carrying out conditional judgement of a search flag. Also, where the flag "F" indicates an image-drawing command and the "CODE" is "011000", the "CODE" is recognized as a rectangular fill command.

"MODE" is used as a field for designating a command address or an image-drawing mode. Namely, when a control command is indicated, the "MODE" is used as the field for designating, in the form of relative address, the address corresponding to the command to be executed immediately after the conditional judgement is carried out (in the present embodiment, after the search condition is met). Inversely, when an image-drawing command is indicated, the "MODE" is used as the field for designating the image-drawing mode.

"BASIC PARAMETER" denotes a field for designating how many parameters accompanies the designated command. The number of parameter added by "one" to the number of parameter designated in the "BASIC PARAMETER" is input to the image processor 11 as one command. For example, where a search command is indicated, four parameters of a starting point, an ending point, a comparison color code and a boundary color mask are necessary and thus "011" is designated in the "BASIC PARAMETER". Also, where a conditional judgement command, which is a command for branching to the designated address when the conditional judgement is carried out, is indicated, the parameters are not necessary and thus "111" is designated in the "BASIC PARAMETER".

Figure 5 illustrates the bit formation in the control register 22a.

In the illustration, an "S" bit is used as a bit for starting the image processor 11. For example, when the external CPU 15 writes "1" as the "S" bit, the image processor 11 fetches data from the command/parameter memory 12 by way of DMA transfer to proceed with image processing. Also, a "U" bit is used as a bit for designating a system mode defined by a user. As previously described, the conditional judgement is carried out according to the information designated in the "U" bit.

Figures 6 and 7 illustrate the bit formation of the conditional judgement command indicated by the "U" bit. Figure 6 shows the formation indicating the branching or jumping to the designated address where the "U" bit is "1", while Fig. 7 shows the formation of the case that the "U" bit is "0".

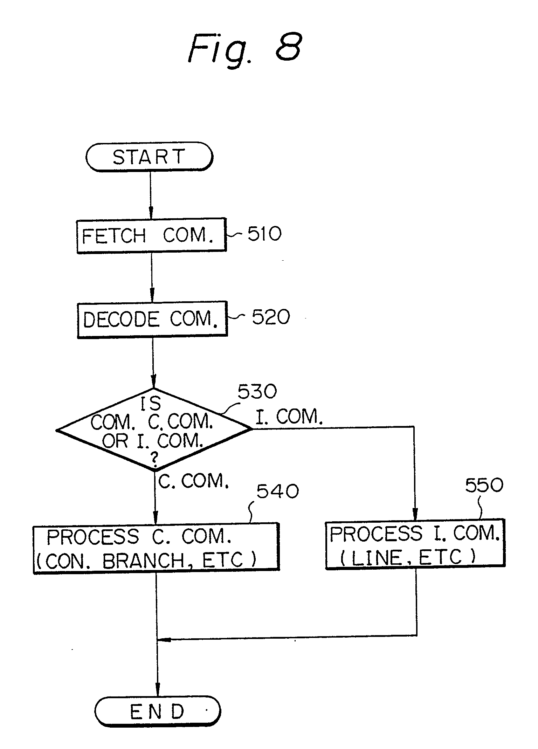

Next, the operation of the image processor 11 will be explained with reference to Figs. 8 to 10.

Figure 8 represents a general flow chart of the command processing by the image processor.

First, at step 510, the image processor 11 fetches a command from the command/parameter memory 12 and writes the command into the internal command register 22.

At step 520, the command decode PLA 23 receives the command from the command register 22 and decodes each field of "F", "CODE" and "BASIC PARAMETER" thereof.

At step 530, the command decode PLA 23 judges whether the command is a control command or an image-drawing command based on the decode processing. If the result indicates the control command, the control proceeds to step 540, and if the result indicates the image-drawing command, the control proceeds to step 550.

At step 540, the control command processing such as conditional judgement branch or the like is executed by the micro control unit 20 (the micro sequencer 20A). On the other hand, at step 550, the image-drawing command processing such as line-drawing or the like is executed by the image-drawing unit 24.

After the processing of step 540 or 550 is completed, the control comes to an "END".

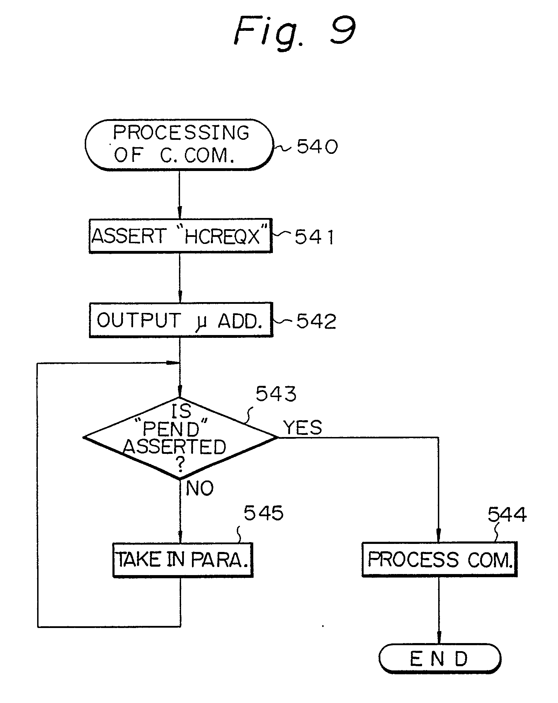

Figure 9 represents a flow chart of the control command processing (540) of Fig. 8.

First, at step 541, the command decode PLA 23 asserts the signal HCREQX indicating that the fetched command is a control command.

At step 542, the command decode PLA 23 outputs micro program starting address data corresponding to the control command. The micro address data (9 bits) is latched in the micro address latch 201 within the micro sequencer 20A.

At step 543, the micro sequencer 20A judges whether the signal PEND from the parameter counter 36 is asserted (YES) or not (NO). Note, with respect to the command not accompanied with parameters, the signal PEND is asserted.

If the result at step 543 is YES, the control proceeds to step 544, where the micro control unit 20 executes the control command processing. After this processing, the control comes to an "END".

On the other hand, if the result at step 543 is NO, the control proceeds to step 545, where the take-in processing of one parameter is carried out. At this time, the number of the basic parameters latched in the parameter counter 36 is counted down by the signal PARADWN from the micro sequencer 20A. After the processing of step 545, the control returns to step 543.

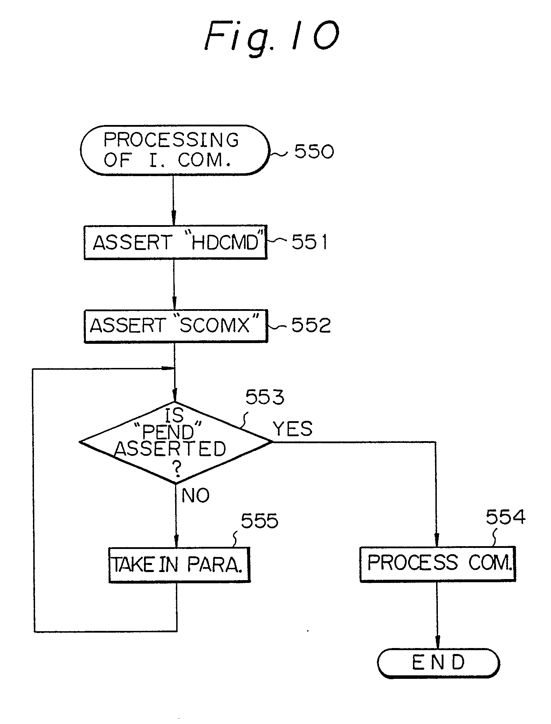

Figure 10 represents a flow chart of the image-drawing command processing (550) of Fig. 8.

First, at step 551, the command decode PLA 23 asserts the signal HDCMD indicating that the fetched command is an image-drawing command.

At step 552, the signal SCOMX is asserted and thus the image-drawing command is transferred via the command register 22 and the internal data bus (INT. D.) and written into the command register 24b within the image-drawing unit 24.

Since the processings at steps 553 to 555 are the same as those at steps 543 to 545 of Fig. 9, the explanation thereof is omitted. Note, with respect to step 554, the image-drawing unit 24 executes the image-drawing command processing.

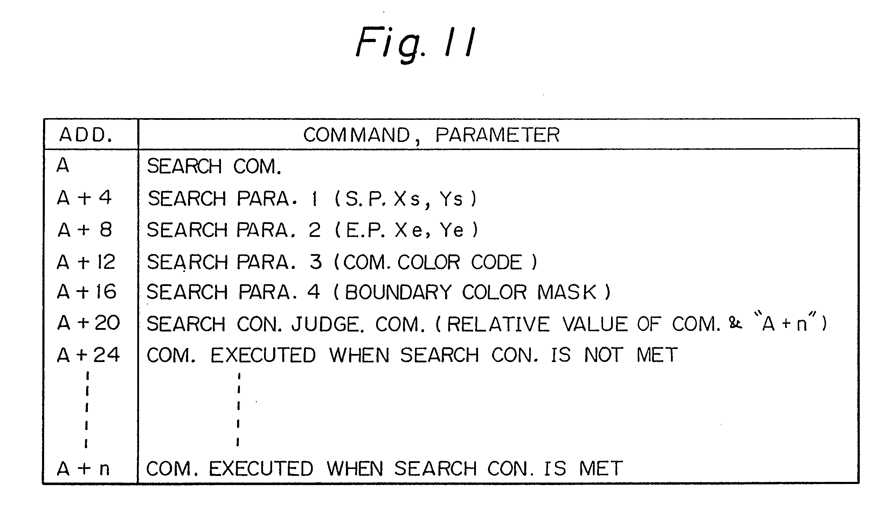

Next, a concrete example of the image processing will be explained further with reference to Fig. 11.

When the external CPU 15 sets "1" to the "U" bit of the control register 22a in the image processor 11 and writes "1" into the "S" bit thereof, the image processor 11 is started to operate. At this time, assuming that the content of the command/parameter memory 12 is defined in the manner shown in Fig. 11. Namely, address "A" stores the command (in the present embodiment, search command); address "A + 20" stores the conditional judgement command of the "U" bit (in the present embodiment, search conditional judgement command); address "A + 24" stores the command to be executed when the search condition is not met; and address "A + n" stores the command to be executed when the search condition is met.

First, the image processor 11 informs the command/parameter memory 12 of the address "A" via the system address bus SAB and fetches the search command corresponding to the address. The fetched command is transferred via the interface unit 21 and the internal data bus and latched in the command register 22. The latched command is decoded by the command decode PLA 23. At the same time, the image processor 11 takes in parameters of the number designated in the "BASIC PARAMETER" field of the command. When the take-in processing of the parameters is completed, the command and parameters are fed to the image-drawing unit 24 under control from the micro control unit 20.

The image-drawing unit 24 brings the flag B to "BUSY" state and starts the execution of the search command based on the fed command and parameters. Namely, the image-drawing unit 24 accesses the refresh memory 13 via the interfacunit 25 to search a color (boundary color) according with the comparison color. When the image-drawing unit 24 searches the boundary color, it sets "1" to the latch circuit 26. Inversely, when the image-drawing unit 24 does not search the boundary color, it sets "0" to the latch circuit 26 and brings the flag B to "READY" state. At this time, the search processing is terminated.

When the image-drawing unit 24 carries out the search processing, the micro control unit 20 fetches the next command, i.e., search conditional judgement command, and waits for the "READY" state of the image-drawing unit 24. At this time, the command pointer 29 of the address calculating unit 27 indicates the address "A + 24" corresponding to the next command.

When the image-drawing unit 24 is brought to the "READY" state, the micro control unit 20 judges the information of the latch circuit 26. Where the information indicates "1", the information in the command pointer 29 of the address calculating unit 27 is sent to the command/parameter memory 12 via the interface unit 21, and the command corresponding to the address "A + 24", i.e., the command to be executed when the search condition is not met, is fetched to the image processor 11.

On the other hand, where the information of the latch circuit 26 indicates "0", information of the subordinate sixteen bits of the command register 22 is transferred to the offset register 28 of the address calculating unit 27. The address calculating unit 27 calculates the address corresponding to the command to be executed at the next step, i.e.,

the command to be executed when the search condition is met. The calculated address is written into the command pointer 29. The information in the command pointer 29 is sent to the command/parameter memory 12 via the interface unit 21, and the command corresponding to the address "A + n", i.e., the command to be executed when the search condition is met, is fetched to the image processor 11.

As explained above, the image processor according to the present embodiment can in itself judge the system mode and thus, even if the image processing program is in the runnung, the image processor per se can judge an arbitrary mode such as resolution and proceed with the image processing program. Namely, it is possible to efficiently carry out the image processing. This contributes to high speed processing.

Also, since the image processor per se can recognize the resolution to effect conditional judgement, it is possible to make an image processing program corresponding to a variety of modes by way of one kind of image processing program.

Furthermore, since the image processor per se can effect conditional judgement for determining the next processing based on a result of the previously executed processing, it is possible to reduce a burden to the external CPU. This contributes to an improvement in the efficiency of operation of the entire system including the image processor.

Although, in the described embodiment, the "U" bit of the control register 22a is defined by the accessing from the CPU 15, it is not restrictive. For example, the "U" bit can be directly given by an external signal line.

Although the present invention has been disclosed and described by way of one embodiment, it is apparent to those skilled in the art that other embodiments and modifications of the present invention are possible without departing from the spirit or essential features thereof.

## Claims

1. An image processing apparatus comprising: means for fetching commands and parameters from an outside of said image processing apparatus by way of direct memory access transfer; and a control means for controlling image-drawing processing according to the fetched commands and parameters, said control means including a conditional branch means for effecting conditional judgement based on arbitrary data designated from the outside of said image processing apparatus to carry out a processing of branching to a predetermined address.

2. An apparatus as set forth in claim 1, wherein said control means further comprises an address indicating means for indicating an address corresponding to a command to be executed at the next step.

3. An apparatus as set forth in claim 2, wherein said address indicating means indicates said predetermined address when said conditional branch means effects said conditional judgement.

4. An apparatus as set forth in claim 3, further comprising means for storing said arbitrary data designated from the outside.

5. An apparatus as set forth in claim 4, wherein said conditional branch means includes at least one of means for carrying out said processing of branching when said arbitrary data is "0" and means for carrying out said processing of branching when said arbitrary data is "1".

6. An apparatus as set forth in claim 5, wherein said arbitrary data includes information of a system mode.

7. An apparatus as set forth in claim 3, wherein said commands to be fetched from the outside includes a conditional judgement command and an image-drawing command.

8. An apparatus as set forth in claim 7, wherein said control means further comprises a first means for decoding said conditional judgement command and executing the decoded command and a second means for executing said image-drawing command.

9. An apparatus as set forth in claim 8, further comprising a third means for latching a result of image-drawing processing by said second means and transferring the latched result to said first means, wherein said first means judges a result of a previously executed image-drawing processing based on the output of said third means in the execution of said conditional judgement command.

10. An image processing system comprising: a memory means in which commands including a specific command for judging a result of image-drawing processing and parameters are stored according to a predetermined address order; a display means; and an image processing control means for fetching the commands and parameters from said memory means by way of direct memory access transfer and effecting the image processing control for said display means, said image processing control means outputting an address designated by said specific command in the execution of said specific command and fetching a command corresponding to the address from said memory means.

11. An image processing system as set forth in claim 10, wherein said image processing control means further comprises an address indicating means for indicating an address corresponding to a command to be executed at the next step.

12. An image processing system as set forth in claim 10, further comprising an external CPU, wherein said external CPU carries out a writing operation of commands and parameters into said memory means.

PMH/HL39720

Fig. 1

# Fig. 2

EP 0 375 339 A2

# Fig. 3

EP 0 375 339 A2

## Fig. 4

0 1       6    9   16                   31 (BIT)

| F | CODE | BASIC PARA. | — | MODE |
|---|------|-------------|---|------|

## Fig. 5

| S | U | — — — — — — — — — — — — — — — — |
|---|---|---------------------------------|

## Fig. 6

   F      CODE

| 0 | 0 1 1 1 0 0 | 1 1 1 | — | RELATIVE VALUE OF BRANCH DEST. |
|---|-------------|-------|---|-------------------------------|

## Fig. 7

   F      CODE

| 0 | 0 1 1 1 0 1 | 1 1 1 | — | RELATIVE VALUE OF BRANCH DEST. |
|---|-------------|-------|---|-------------------------------|

## Fig. 8

```
        ( START )
            |
            v
    [ FETCH  COM. ]─~ 510
            |
            v
    [ DECODE COM. ]─~ 520
            |
            v
           530
        /   IS   \
       / COM. C.COM. \  I. COM.
       \  OR I. COM. / ───────────┐
        \    ?    /                |
            | C. COM.              |
            v  540                 v  550
[ PROCESS C. COM.      ]   [ PROCESS I. COM. ]
[ (CON. BRANCH, ETC )  ]   [ (LINE, ETC )     ]
            |                     |
            └──────────┬──────────┘
                       v
                 ( END )
```

*Fig. 9*

```
        ┌─────────────────┐
        │   PROCESSING    │╮~540
        │   OF  C. COM.   │
        └────────┬────────┘
                 │
                 ▼
        ┌─────────────────┐
        │ ASSERT "HCREQX" │~541
        └────────┬────────┘
                 │
                 ▼
        ┌─────────────────┐
        │  OUTPUT  μ ADD. │~542
        └────────┬────────┘
                 │
    ┌────────────┤
    │            ▼        543
    │          ╱IS ╲
    │        ╱ "PEND" ╲    YES
    │      ◄ ASSERTED  ►──────────────┐
    │        ╲   ?   ╱                │
    │          ╲   ╱                  │
    │            │ NO                 │
    │       545  │          544       │
    │            ▼                    ▼
    │   ┌─────────────────┐  ┌─────────────────┐
    │   │ TAKE IN PARA.   │  │  PROCESS COM.   │
    │   └─────────────────┘  └────────┬────────┘
    │            │                    │
    └────────────┘                    ▼
                              ┌─────────────────┐
                              │     E N D       │
                              └─────────────────┘
```

# Fig. 10

```
        ┌─────────────────┐
        │  PROCESSING     │ ～ 550
        │  OF I. COM.     │
        └────────┬────────┘
                 │
        ┌────────▼────────┐
        │ ASSERT "HDCMD"  │ ～ 551
        └────────┬────────┘
                 │
        ┌────────▼────────┐
        │ ASSERT "SCOMX"  │ ～ 552
        └────────┬────────┘
    ┌────────────┤
    │            │            553
    │         ╱──▼──╲
    │        ╱  IS   ╲        YES
    │       ╱ "PEND"  ╲──────────────┐
    │       ╲ ASSERTED╱               │
    │        ╲   ?   ╱                │
    │         ╲──┬──╱                 │
    │            │ NO                 │
    │       555  │              554   │
    │     ┌──────▼──────┐      ┌──────▼──────┐
    │     │ TAKE IN PARA.│     │ PROCESS COM.│
    │     └──────┬──────┘      └──────┬──────┘
    └────────────┘                    │
                                 ┌────▼────┐
                                 │  END    │
                                 └─────────┘
```

# Fig. 11

| ADD. | COMMAND, PARAMETER |
|------|--------------------|
| A | SEARCH COM. |
| A + 4 | SEARCH PARA. 1 (S.P. Xs, Ys) |
| A + 8 | SEARCH PARA. 2 (E.P. Xe, Ye) |
| A + 12 | SEARCH PARA. 3 (COM. COLOR CODE) |
| A + 16 | SEARCH PARA. 4 (BOUNDARY COLOR MASK) |
| A + 20 | SEARCH CON. JUDGE. COM. (RELATIVE VALUE OF COM. & "A + n") |
| A + 24 | COM. EXECUTED WHEN SEARCH CON. IS NOT MET |
| A + n | COM. EXECUTED WHEN SEARCH CON. IS MET |

EP 0 375 339 A2